# EUROPEAN PATENT SPECIFICATION

(11) **EP 4 450 375 B1**
(45) Date of publication and mention of the grant of the patent: **30.04.2025**
(21) Application number: 24164130.7
(22) Date of filing: 18.03.2024
(51) Int. Cl.: B62K 5/10, B62H 1/02, B62H 1/04, B62K 5/027, B62K 5/05, B62K 5/08

(54) **LEANING VEHICLE**
NEIGEFAHRZEUG
VÉHICULE INCLINABLE

(30) Priority: 18.04.2023 JP 2023067597
(43) Date of publication of application: 23.10.2024
(73) Proprietor: Yamaha Hatsudoki Kabushiki Kaisha, Iwata-shi, Shizuoka-ken 438-8501 (JP)
(72) Inventor: Nagata, Tatsuya, Iwata-shi, Shizuoka-ken, 438-8501 (JP); Uchiyama, Toshifumi, Iwata-shi, Shizuoka-ken, 438-8501 (JP); Sasaki, Ryo, Iwata-shi, Shizuoka-ken, 438-8501 (JP); Morita, Tomoro, Iwata-shi, Shizuoka-ken, 438-8501 (JP)
(74) Representative: Grünecker Patent- und Rechtsanwälte PartG mbB

(56) References cited:
- EP-A1- 4 005 902
- EP-A1- 4 159 607

## Description

The present invention relates to a leaning vehicle having a left wheel and a right wheel, wherein the leaning vehicle tilts when turning left and right.

For example, as disclosed in JP 2018-149962 A, a leaning vehicle has been known in the art that includes a vehicle body frame capable of tilting when turning left and right, a left wheel and a right wheel supporting the vehicle body frame, and a link mechanism that links together the vehicle body frame, the left wheel and the right wheel. The vehicle body frame, the left wheel and the right wheel are linked to the link mechanism so that they are rotatable around an axis extending in the vehicle front-rear direction.

The leaning vehicle includes an actuator that applies a torque around an axis extending in the vehicle front-rear direction to the vehicle body frame. According to such a leaning vehicle, the actuator can be controlled to keep the vehicle body frame standing by itself. Hereinafter, keeping the vehicle body frame standing by itself by using the actuator will be referred to as standing assist. By providing standing assist when the vehicle is stopped, the vehicle body frame can be kept from leaning even if the rider does not put their feet on the ground.

EP 4 159 607 A1 discloses a leaning vehicle according to the preamble of claim 1.

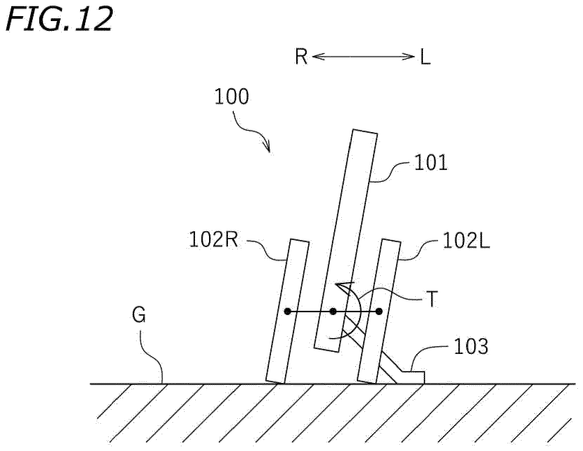

When executing standing assist, the vehicle body frame receives a force from the actuator that urges the vehicle body frame to stand in the vertical direction. The vehicle body frame receives a rightward force when tilted leftward, and receives a leftward force when tilted rightward. Now, as shown in FIG. 12, there are cases where a leaning vehicle 100 including a vehicle body frame 101, a left wheel 102L and a right wheel 102R is parked by using a side stand 103. Note that designations L and R, as used in the figures, refer to left and right, respectively. When the side stand 103 supports the leaning vehicle 100, the vehicle body frame 101 tilts leftward from the vertical direction. By tilting leftward, the vehicle body frame 101 is supported by the side stand 103. However, when executing standing assist, the vehicle body frame 101 receives a rightward torque T from the actuator. Therefore, it may not be possible to desirably support the leaning vehicle 100 by the side stand 103.

When parking a leaning vehicle using a center stand, a similar problem occurs if the ground is tilted from the horizontal plane. For example, if the ground is tilted leftward, the vehicle body frame of the leaning vehicle supported by the center stand is tilted leftward from the vertical direction. When executing standing assist, the vehicle body frame receives a rightward torque from the actuator. Therefore, it may not be possible to desirably support the leaning vehicle by the center stand.

It is an object of the present invention to provide a leaning vehicle that can be desirably parked by a stand even if the rider put up the stand during execution of the standing assist. According to the present invention said object is solved by a leaning vehicle having the features of independent claim 1. Preferred embodiments are laid down in the dependent claims.

A leaning vehicle disclosed herein includes: a vehicle body frame including a head pipe; a left wheel arranged leftward relative to the head pipe; a right wheel arranged rightward relative to the head pipe; a left wheel support member that supports the left wheel; a right wheel support member that is arranged rightward of the left wheel support member and supports the right wheel; a link member extending leftward and rightward of the vehicle body frame; a central link shaft extending in a vehicle front-rear direction that rotatably links the vehicle body frame to the link member; a left link shaft extending in the vehicle front-rear direction that rotatably links the left wheel support member to the link member; a right link shaft extending in the vehicle front-rear direction that rotatably links the right wheel support member to the link member; an actuator that applies a torque around the central link shaft to the vehicle body frame; a control device that controls the actuator; a stand mounted on the vehicle body frame so that the stand can change position between a retracted position and a support position, wherein the stand is in contact with the ground when in the support position to support the vehicle body frame; and a sensor that detects whether or not the stand is in the support position. The control device includes: a standing assist control section that executes standing assist for controlling the actuator so that the vehicle body frame stands in a vertical direction; and a standing assist discontinuation section that discontinues the standing assist of the standing assist control section if it is detected by the sensor that the stand is in the support position while the standing assist control section is executing the standing assist.

With the leaning vehicle described above, if the rider moves the stand from the retracted position to the support position during execution of the standing assist, the standing assist is discontinued. Therefore, it is possible to prevent the operation of the actuator from hindering the support of the vehicle body frame by the stand. Thus, it is possible to desirably park even if the rider put up the stand during execution of the standing assist.

The control device may include a standing assist resumption section that resumes the standing assist by the standing assist control section if it is detected by the sensor that the stand is not in the support position while the standing assist is discontinued by the standing assist discontinuation section.

Thus, the standing assist is resumed when the rider moves the stand from the support position to the retracted position. Therefore, the rider can easily start the leaning vehicle.

The standing assist discontinuation section may be configured so that while the standing assist is discontinued, the standing assist discontinuation section gradually reduces the torque output by the actuator until a predetermined amount of time elapses since when the sensor detects that the stand is in the support position so that the torque output by the actuator is zero when the predetermined amount of time has elapsed.

Thus, it is possible to prevent the torque output by the actuator from disappearing suddenly when the rider moves the stand from the retracted position to the support position. Since it is possible to avoid a sudden load being applied to the stand when the stand is moved to the support position, it is possible to more desirably park the leaning vehicle.

The leaning vehicle may include: a steering shaft supported by the head pipe; and a steering handle fixed to the steering shaft. The left wheel and the right wheel may be a left front wheel and a right front wheel, respectively, arranged forward relative to the steering handle.

The leaning vehicle may include a rear wheel arranged rearward relative to the left wheel and the right wheel. The stand may be a center stand that supports the vehicle body frame with the rear wheel raised off the ground.

The stand may be a side stand that supports the vehicle body frame in a tilted state relative to the ground.

The leaning vehicle may include: a seat supported by the vehicle body frame; and a footrest that supports feet of a rider seated on the seat, the footrest being supported by the vehicle body frame and arranged downward of the seat.

### Advantageous Effects Of Invention

According to the present invention, it is possible to provide a leaning vehicle that can be desirably parked by a stand even if the rider put up the stand during execution of the standing assist.

### BRIEF DESCRIPTION OF THE DRAWINGS

FIG. 1 is a left side view of a leaning vehicle according to one embodiment.
FIG. 2 is a left side view of a part of the leaning vehicle.
FIG. 3 is a left side view of a part of the leaning vehicle.
FIG. 4 is a front view of a part of the leaning vehicle.
FIG. 5 is a plan view of a part of the leaning vehicle.
FIG. 6 is a front view of a part of the leaning vehicle when the vehicle body frame is tilted leftward.
FIG. 7 is a block diagram of a control system of the leaning vehicle.
FIG. 8 is an electric circuit diagram of a part of the leaning vehicle.
FIG. 9 is a graph showing the relationship between the time elapsed since a center stand is pulled down and the output torque of the lean actuator.
FIG. 10 is a schematic diagram showing a case where the leaning vehicle is parked by using the center stand on a tilted ground.
FIG. 11 is a schematic diagram showing a case where the leaning vehicle is parked by using a side stand.
FIG. 12 is a schematic diagram showing a case where a leaning vehicle is parked by using a side stand.

### DETAILED DESCRIPTION OF THE PREFERRED EMBODIMENTS

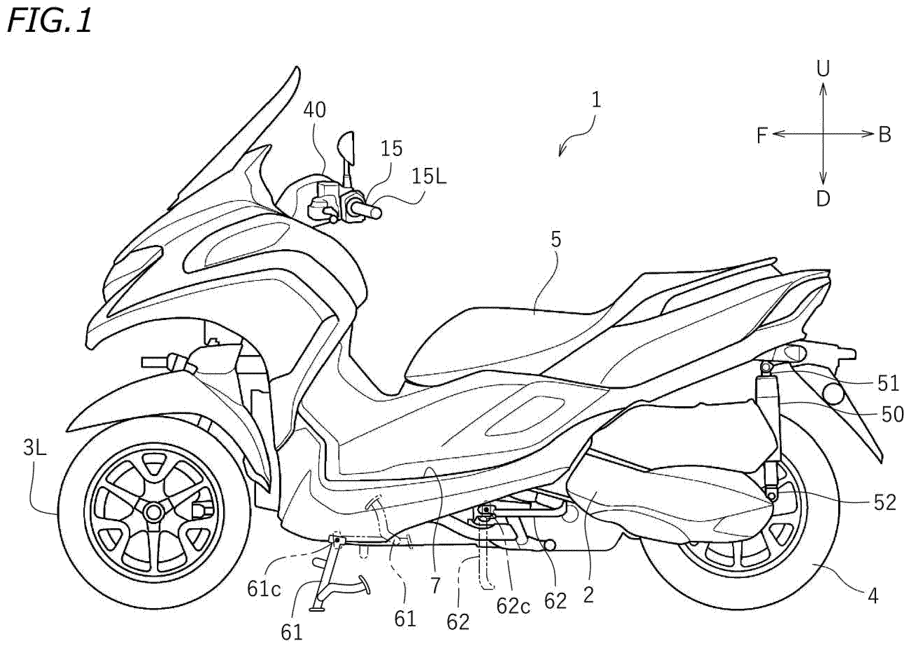

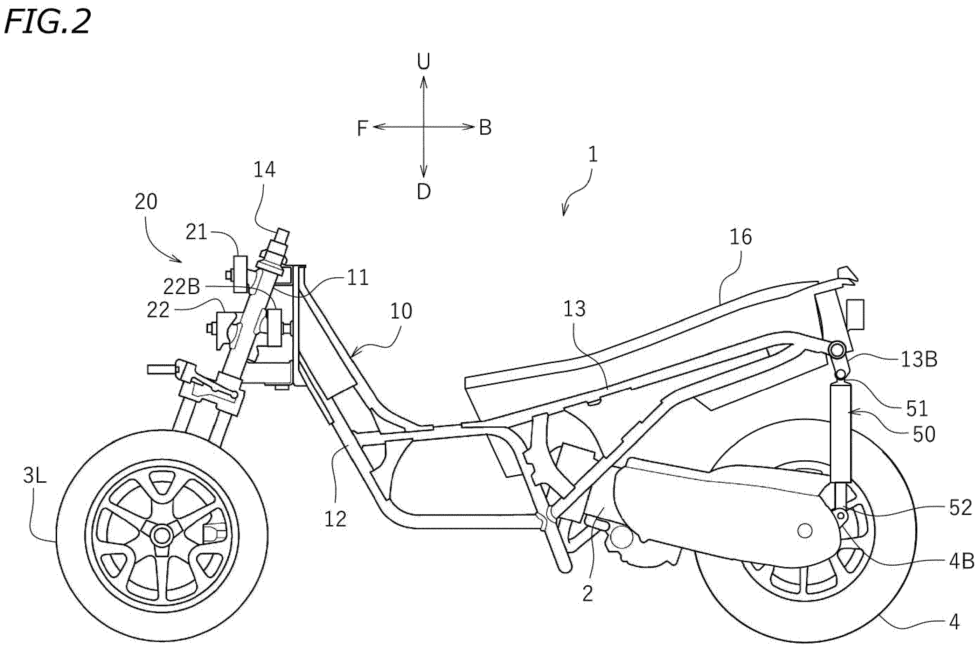

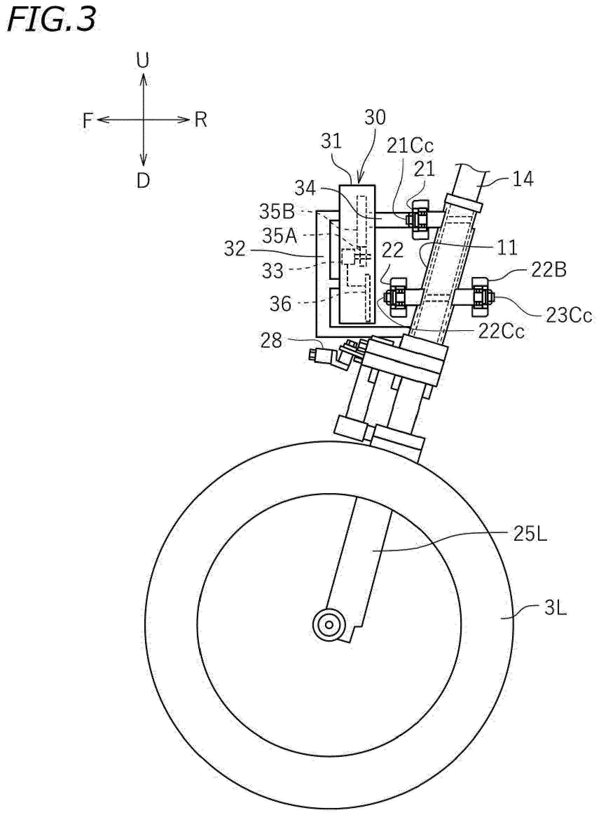

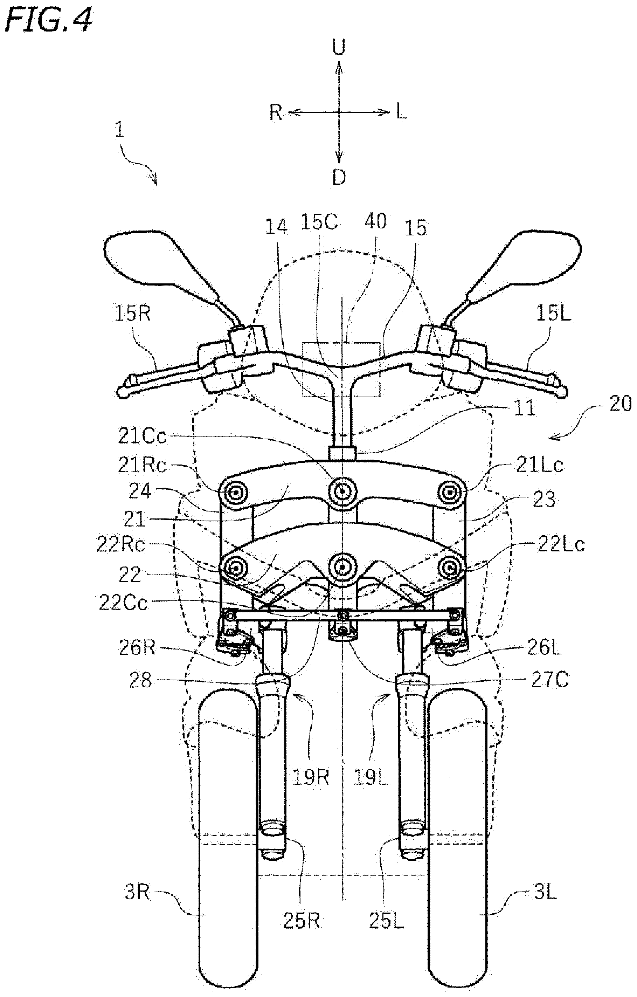

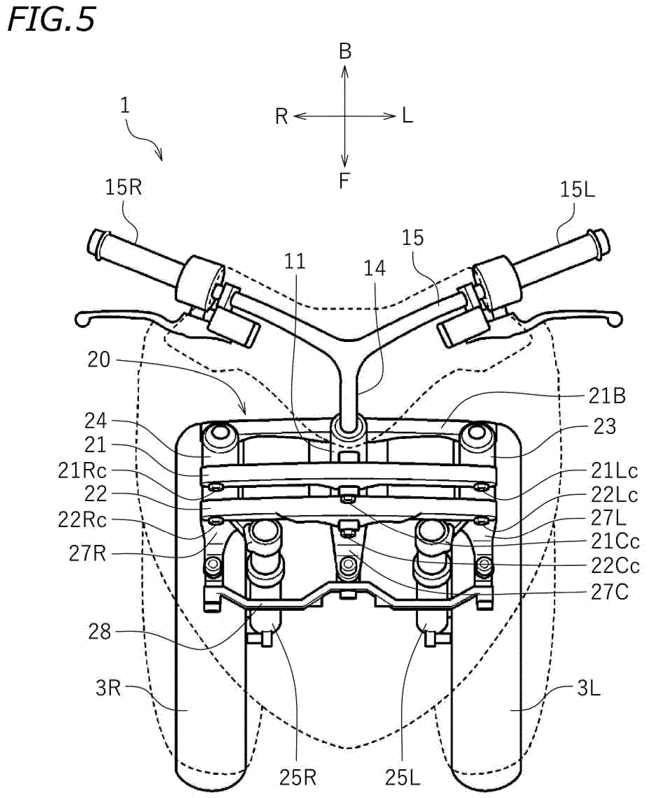

One embodiment of a leaning vehicle will now be described with reference to the drawings. FIG. 1 is a left side view of a leaning vehicle 1 according to the present embodiment. FIG. 2 is a left side view of a part of the leaning vehicle 1. FIG. 3 is a left side view of a part of the leaning vehicle 1. FIG. 4 is a front view of a part of the leaning vehicle 1. FIG. 5 is a plan view of a part of the leaning vehicle 1.

The terms front, rear, left, right, up and down, as used in the description below, refer to these directions as seen from a virtual rider seated on a seat 5 while the leaning vehicle 1 is standing upright (standing upright as used herein refers to a state where a vehicle body frame 10 to be described below is standing upright) on a horizontal surface with no rider and no load thereon, unless specified otherwise. The designations F, B, L, R, U and D, as used in the figures, refer to front, rear, left, right, up and down, respectively. The vehicle up-down direction coincides with the vertical direction. The vehicle front-rear direction is orthogonal to the vehicle up-down direction. The vehicle left-right direction is orthogonal to the vehicle front-rear direction and the vehicle up-down direction.

As shown in FIG. 1 and FIG. 2, the leaning vehicle 1 includes the vehicle body frame 10, a link mechanism 20, a left front wheel 3L, a right front wheel 3R (see FIG. 4), a rear wheel 4, a power unit 2, the seat 5 and a storage box 16. The leaning vehicle 1 is a three-wheel vehicle with two front wheels 3L, 3R and one rear wheel 4. The leaning vehicle 1 also includes a center stand 61 and a side stand 62.

As shown in FIG. 2, the vehicle body frame 10 includes a head pipe 11, a down frame 12 extending rearward and downward from the head pipe 11, and a seat frame 13 extending rearward from the down frame 12. The seat 5 is supported by the vehicle body frame 10. Herein, the seat 5 is supported by the seat frame 13. The storage box 16 is arranged downward of the seat 5, and supported by the seat frame 13. As shown in FIG. 4, a steering shaft 14 is rotatably supported by the head pipe 11. A steering handle 15 is fixed to the steering shaft 14. An accelerator grip 15R is provided at the right end portion of the steering handle 15, and a left grip 15L is provided at the left end portion of the steering handle 15.

As shown in FIG. 1, the leaning vehicle 1 according to the present embodiment is a scooter. The leaning vehicle 1 includes a low footrest 7. The footrest 7 is supported by the vehicle body frame 10. Herein, the footrest 7 is supported by the down frame 12 (see FIG. 2). The footrest 7 is arranged downward of the seat 5. The footrest 7 is a platform for supporting the feet of the rider seated on the seat 5.

As shown in FIG. 4, the link mechanism 20 is a parallelogram link-type link mechanism. The link mechanism 20 is arranged upward relative to the left front wheel 3L and the right front wheel 3R. The link mechanism 20 includes an upper arm 21, a lower arm 22, a left arm 23 and a right arm 24.

The upper arm 21 and the lower arm 22 extend leftward and rightward. The upper arm 21 and the lower arm 22 are examples of link members extending leftward and rightward of the vehicle body frame 10. The lower arm 22 is arranged downward of the upper arm 21. The upper arm 21 and the lower arm 22 are arranged forward of the head pipe 11 (see FIG. 2). The upper arm 21 is rotatably linked to the head pipe 11 by a first central link shaft 21Cc extending in the vehicle front-rear direction. The lower arm 22 is rotatably linked to the head pipe 11 by a second central link shaft 22Cc extending in the vehicle front-rear direction.

In the present embodiment, as shown in FIG. 2, another lower arm 22B is arranged rearward of the head pipe 11. The lower arm 22B extends leftward and rightward. The lower arm 22B is arranged downward of the upper arm 21. The lower arm 22B is rotatably linked to the head pipe 11 by a third central link shaft 23Cc (see FIG. 3) extending in the vehicle front-rear direction. Note that another upper arm (not shown) may be arranged rearward of the head pipe 11, and this upper arm may be rotatably linked to the head pipe 11 by another central link shaft (not shown) extending in the vehicle front-rear direction. Note however that the other upper arm and the other lower arm 22B arranged rearward of the head pipe 11 are optional.

As shown in FIG. 4, the left arm 23 and the right arm 24 extend upward and downward. The left arm 23 is arranged leftward of the head pipe 11 and the right arm 24 is arranged rightward of the head pipe 11. The right arm 24 is arranged rightward of the left arm 23. The left arm 23 and the right arm 24 are arranged rearward of the upper arm 21 and the lower arm 22. The left arm 23 and the right arm 24 are arranged forward of the lower arm 22B. The left arm 23 and the right arm 24 are rotatably linked to the upper arm 21, the lower arm 22 and the lower arm 22B.

Specifically, the upper end portion of the left arm 23 is rotatably linked to the left end portion of the upper arm 21 by a first left link shaft 21Lc extending in the vehicle front-rear direction. The lower end portion of the left arm 23 is rotatably linked to the left end portion of the lower arm 22 by a second left link shaft 22Lc extending in the vehicle front-rear direction. The lower end of the left arm 23 is rotatably linked to the left end portion of the lower arm 22B by a third left link shaft (not shown) extending in the vehicle front-rear direction. The upper end portion of the right arm 24 is rotatably linked to the right end portion of the upper arm 21 by the first right link shaft 21Rc extending in the vehicle front-rear direction. The lower end portion of the right arm 24 is rotatably linked to the right end portion of the lower arm 22 by the second right link shaft 22Rc extending in the vehicle front-rear direction. The lower end portion of the right arm 24 is rotatably linked to the right end portion of the lower arm 22B by a third right link shaft (not shown) extending in the vehicle front-rear direction.

The leaning vehicle 1 includes, as front suspensions, a left suspension 25L and a right suspension 25R. In the present embodiment, the left suspension 25L and the right suspension 25R are telescopic suspensions. The upper end portion of the left suspension 25L and the upper end portion of the right suspension 25R are connected to the link mechanism 20. The lower end portion of the left suspension 25L is connected to the left front wheel 3L, and the lower portion of the right suspension 25R is connected to the right front wheel 3R. Specifically, the upper end portion of the left suspension 25L is connected to the lower end portion of the left arm 23 via a left bracket 26L. The upper end portion of the left suspension 25L is connected to the left arm 23 so as to be rotatable in the left-right direction of the vehicle body frame 10. The upper end portion of the right suspension 25R is connected to the lower end portion of the right arm 24 via a right bracket 26R. The upper end portion of the right suspension 25R is connected to the right arm 24 so as to be rotatable in the left-right direction of the vehicle body frame 10.

The left suspension 25L, the left bracket 26L and the left arm 23 together form a left wheel support member 19L that supports the left front wheel 3L. The right suspension 25R, the right bracket 26R and the right arm 24 together form a right wheel support member 19R that supports the right front wheel 3R.

A center plate 27C is fixed to the lower end portion of the steering shaft 14. As shown in FIG. 5, the center plate 27C extends forward from the steering shaft 14. A left plate 27L is fixed to the left bracket 26L. A right plate 27R is fixed to the right bracket 26R. The left plate 27L, the center plate 27C and the right plate 27R are linked to a tie rod 28 so as to be rotatable left and right. The steering shaft 14 is linked to the left arm 23 and the right arm 24 via the center plate 27C, the tie rods 28, the left plate 27L and the right plate 27R.

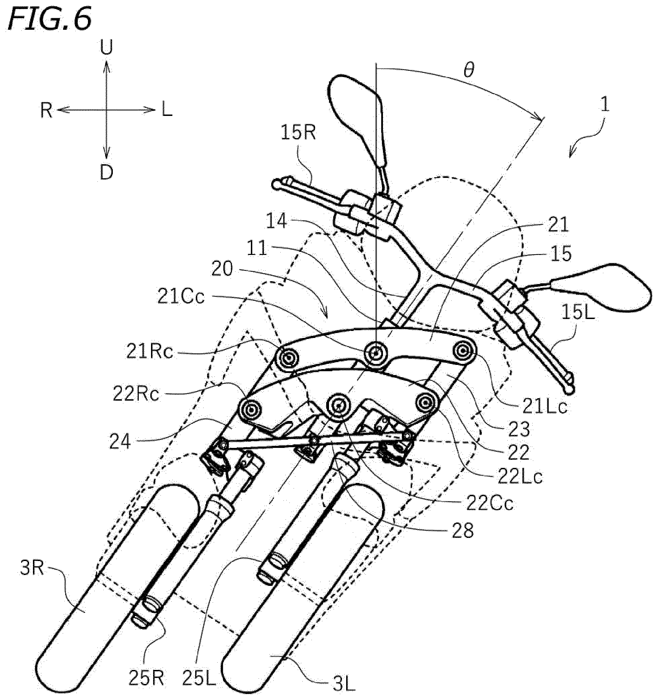

As shown in FIG. 3, the leaning vehicle 1 includes a roll angle control device 30 that controls the roll angle. Note that in the figures other than FIG. 3, the roll angle control device 30 is not shown. The roll angle as used herein is the tilt angle θ (see FIG. 6) of the vehicle body frame 10 from the vertical line. Note that in the present embodiment, the roll angle θ is equal to the angle between the axis of the head pipe 11 and the vertical line as viewed in the vehicle front view. The roll angle control device 30 controls the roll angle of the vehicle body frame 10 by adjusting the rotation of the upper arm 21 and the lower arm 22 relative to the vehicle body frame 10. The roll angle control device 30 is configured to apply a torque to at least one of the upper arm 21 and the lower arm 22. The roll angle control device 30 is connected to at least one of the upper arm 21 and lower arm 22, and to the vehicle body frame 10. In the present embodiment, the roll angle control device 30 is connected to the upper arm 21 and the head pipe 11. Note however that there is no particular limitation thereto, and the roll angle control device 30 may be connected to the lower arm 22 and the head pipe 11.

The roll angle control device 30 includes a case 31, a lean actuator 33, a gear 35A and a gear 35B arranged inside the case 31, and an actuator control device 36 arranged inside the case 31. The case 31 is supported by a support member 32 fixed to the head pipe 11.

The lean actuator 33 is a power source that applies a torque around the first central link shaft 21Cc to the vehicle body frame 10. The lean actuator 33 may apply a torque directly or indirectly to the vehicle body frame 10. In the present embodiment, the lean actuator 33 applies a leftward or rightward torque to the upper arm 21, thereby indirectly applying a rightward or leftward torque to the vehicle body frame 10. In the present embodiment, the lean actuator 33 is an electric motor. Note however that the lean actuator 33 is not limited to an electric motor as long as the lean actuator 33 can generate power.

The lean actuator 33 is connected to the gear 35A, and the gear 35A is meshed with the gear 35B. The gear 35A and the gear 35B together form a decelerator. The gear 35B is fixed to an output shaft 34. The output shaft 34 is a rotating shaft driven by the lean actuator 33 and is connected to the upper arm 21. The torque of the lean actuator 33 is transmitted to the upper arm 21 via the gear 35A, the gear 35B and the output shaft 34. When the lean actuator 33 is driven, a torque around the first central link shaft 21Cc (see FIG. 4) is applied to the upper arm 21. Since the upper arm 21 is linked to the vehicle body frame 10 so as to be rotatable around the first central link shaft 21Cc, when a torque around the first central link shaft 21Cc is applied to the upper arm 21, a torque around the first central link shaft 21Cc is generated in the vehicle body frame 10.

The leaning vehicle 1 includes an IMU (not shown). The actuator control device 36 is communicatively connected to the IMU via a wire harness (not shown). The actuator control device 36 is configured to receive a signal from the IMU and control the lean actuator 33.

As shown in FIG. 2, a power unit 2 is pivotally supported on the vehicle body frame 10. The power unit 2 is connected to the rear wheel 4 so that power can be transmitted therebetween. The power unit 2 generates driving force for traveling. The power unit 2 provides power to the rear wheel 4. The power unit 2 may include an internal combustion engine or may include an electric motor. In the present embodiment, the power unit 2 includes an internal combustion engine (hereinafter referred to as an "engine").

The leaning vehicle 1 includes left and right rear suspensions 50. The left rear suspension 50 is arranged leftward of the rear wheel 4 and the right rear suspension 50 is arranged rightward of the rear wheel 4. Each rear suspension 50 includes an upper support portion 51 pivotably supported on the vehicle body frame 10 and a lower support portion 52 pivotably supported on the rear wheel 4. Herein, the upper support portion 51 is pivotably supported on the seat frame 13 via a bracket 13B. The lower support portion 52 is pivotably supported on a bracket 4B mounted on the axle of the rear wheel 4.

The center stand 61 is a stand that supports the vehicle body frame 10 standing upright relative to the ground. Here, the center stand 61 is configured to support the vehicle body frame 10 with the rear wheel 4 raised off the ground. The center stand 61 is mounted directly or indirectly on the vehicle body frame 10. Note that indirectly mounted means that it is mounted via another member such as a bracket. The center stand 61 is configured to be rotatable around the stand pivot 61c. The center stand 61 can change position between a retracted position and a support position by rotating around the stand pivot 61c. The support position of the center stand 61 is the position where the center stand 61 supports the vehicle body frame 10, and is the position indicated by the solid line in FIG. 1. The center stand 61 is positioned in the support position when the leaning vehicle 1 is parked by using the center stand 61. The retracted position of the center stand 61 is the position where the center stand 61 is not supporting the vehicle body frame 10, and is the position indicated by the two-dot chain line in FIG. 1. The center stand 61 is positioned in the retracted position when the leaning vehicle 1 is running and when the leaning vehicle 1 is parked by using the side stand 62. Note that the center stand 61 is operated by a rider's foot. The rider uses a foot to change the position of the center stand 61.

The side stand 62 is a stand that supports the vehicle body frame 10 in a tilted state relative to the ground. The side stand 62 is mounted directly or indirectly on the vehicle body frame 10. The side stand 62 is configured to be rotatable around a stand pivot 62c. The side stand 62 can change position between a retracted position and a support position by rotating around the stand pivot 62c. The support position of the side stand 62 is the position where the side stand 62 supports the vehicle body frame 10, and is indicated by the two-dot chain line in FIG. 1. The side stand 62 is positioned in the support position when the leaning vehicle 1 is parked by using the side stand 62. The retracted position of the side stand 62 is the position where the side stand 62 is not supporting the vehicle body frame 10, and is indicated by the solid line in FIG. 1. The side stand 62 is positioned in the retracted position when the leaning vehicle 1 is running and when the leaning vehicle 1 is parked by using the center stand 61. Similar to the center stand 61, the side stand 62 is operated by a rider's foot. The rider uses a foot to change the position of the side stand 62.

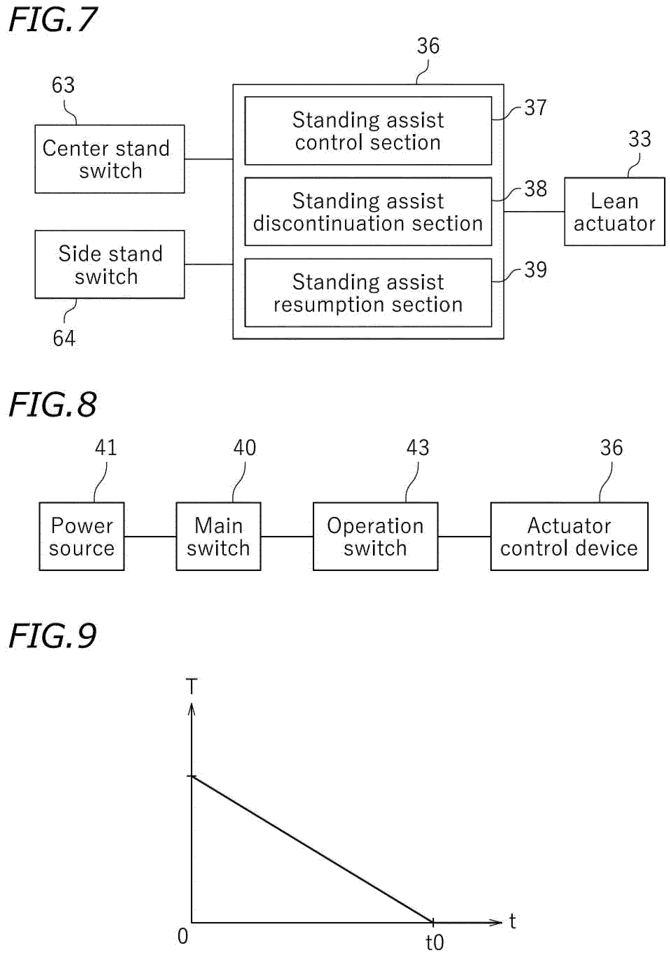

As shown in FIG. 7, the leaning vehicle 1 includes a center stand switch 63 as a sensor to detect whether the center stand 61 is in the support position. The center stand switch 63 is attached to the center stand 61. The center stand switch 63 is configured to detect the position of the center stand 61 based on the rotational position of the stand pivot 61c. Here, the center stand switch 63 is configured to be ON when the center stand 61 is in the support position and OFF when the center stand 61 is not in the support position.

The leaning vehicle 1 includes a side stand switch 64 as a sensor to detect whether the side stand 62 is in the support position. The side stand switch 64 is mounted on the side stand 62. The side stand switch 64 is configured to detect the position of the side stand 62 based on the rotational position of the stand pivot 62c. Here, the side stand switch 64 is configured to be ON when the side stand 62 is in the support position and OFF when the side stand 62 is not in the support position.

With the leaning vehicle 1, the actuator control device 36 controls the lean actuator 33 to automatically keep the vehicle body frame 10 standing upright. Hereinafter, keeping the vehicle body frame 10 standing by itself by the actuator control device 36 controlling the lean actuator 33 will be referred to as standing assist.

For example, when the rider seated on the seat 5 applies their weight leftward, the vehicle body frame 10 is subjected to a leftward force. As it is, the vehicle body frame 10 will tilt leftward. The actuator control device 36 detects the tilt of the vehicle body frame 10 based on the signal from the IMU. Upon detecting the tilt of the vehicle body frame 10, the actuator control device 36 controls the lean actuator 33 so as to eliminate the tilt. Specifically, the actuator control device 36 controls the lean actuator 33 so that the roll angle of the vehicle body frame 10 is zero. When the vehicle body frame 10 tilts leftward, the actuator control device 36 controls the lean actuator 33 to apply a rightward torque to the vehicle body frame 10. The actuator control device 36 controls the lean actuator 33 to apply a leftward torque to the vehicle body frame 10 when the vehicle body frame 10 tilts rightward.

As shown in FIG. 8, the leaning vehicle 1 includes a power source 41 that supplies power, a main switch 40, an operation switch 43, and electrical components including the actuator control device 36. Although not shown in the figure, the leaning vehicle 1 includes a battery and a generator that generates electricity by the power of the power unit 2. The power source 41 is comprised of the battery and the generator. The main switch 40 is a switch that switches ON/OFF the power supply from the power source 41 to electrical components. There is no particular limitation on the locations of the main switch 40 and the operation switch 43. The main switch 40 or the operation switch 43 may be mounted on the steering handle 15, for example. The main switch 40 or the operation switch 43 may be arranged rightward of the left grip 15L or arranged leftward of the accelerator grip 15R.

The operation switch 43 is a switch that switches ON/OFF the standing assist. During execution of the standing assist, the vehicle body frame 10 is kept standing by itself even if the rider does not put their feet on the ground. During execution of the standing assist, the vehicle body frame 10 is kept standing by itself even if the rider places both feet on the footrest 7. If the operation switch 43 is turned ON while the main switch 40 is ON, the standing assist is started, and if the operation switch 43 is turned OFF while the main switch 40 is ON, the standing assist is terminated.

The actuator control device 36 is a computer. As shown in FIG. 7, the actuator control device 36 executes a computer program and as a result functions as a standing assist control section 37, a standing assist discontinuation section 38 and a standing assist resumption section 39. The actuator control device 36 is communicatively connected to the center stand switch 63, the side stand switch 64 and the lean actuator 33. The actuator control device 36 is configured to detect the position of the center stand 61 and the side stand 62 by receiving signals from the center stand switch 63 and the side stand switch 64.

The standing assist control section 37 controls the lean actuator 33 so as to keep the vehicle body frame 10 standing by itself. In other words, the standing assist control section 37 controls the lean actuator 33 so that the vehicle body frame 10 stands in the vertical direction. The standing assist control section 37 executes the standing assist.

If it is detected by the center stand switch 63 that the center stand 61 is in the support position or if it is detected by the side stand switch 64 that the side stand 62 is in the support position while the standing assist control section 37 is executing the standing assist, the standing assist discontinuation section 38 discontinues the standing assist of the standing assist control section 37.

Here, the standing assist discontinuation section 38 is configured to gradually reduce the output torque of the lean actuator 33 when discontinuing the standing assist. Specifically, as shown in FIG. 9, upon detecting that the center stand 61 is in the support position, the standing assist discontinuation section 38 is configured to gradually reduce the output torque T of the lean actuator 33 until a predetermined amount of time t0 elapses from the detection so that the output torque T is zero when the predetermined amount of time t0 has elapsed. Note that the horizontal axis t in FIG. 9 represents the time elapsed since the detection of the center stand 61 being in the support position, and the vertical axis T represents the output torque of the lean actuator 33. Similarly, upon detecting the side stand 62 being in the support position, the standing assist discontinuation section 38 is configured to gradually reduce the output torque of the lean actuator 33 until a predetermined amount of time elapses from the detection so that the output torque of the lean actuator 33 is zero when the predetermined amount of time has elapsed.

If it is detected by the center stand switch 63 that the center stand 61 is not in the support position and if it is detected by the side stand switch 64 that the side stand 62 is not in the support position while the standing assist is discontinued by the standing assist discontinuation section 38, the standing assist resumption section 39 resumes the standing assist by the standing assist control section 37.

The leaning vehicle 1 is configured as described above. The leaning vehicle 1 according to the present embodiment is capable of providing standing assist, and with the standing assist, the rider can stop the leaning vehicle 1 without placing their feet on the ground. Then, the rider may park the leaning vehicle 1 by using the center stand 61 or the side stand 62 while the standing assist is being provided.

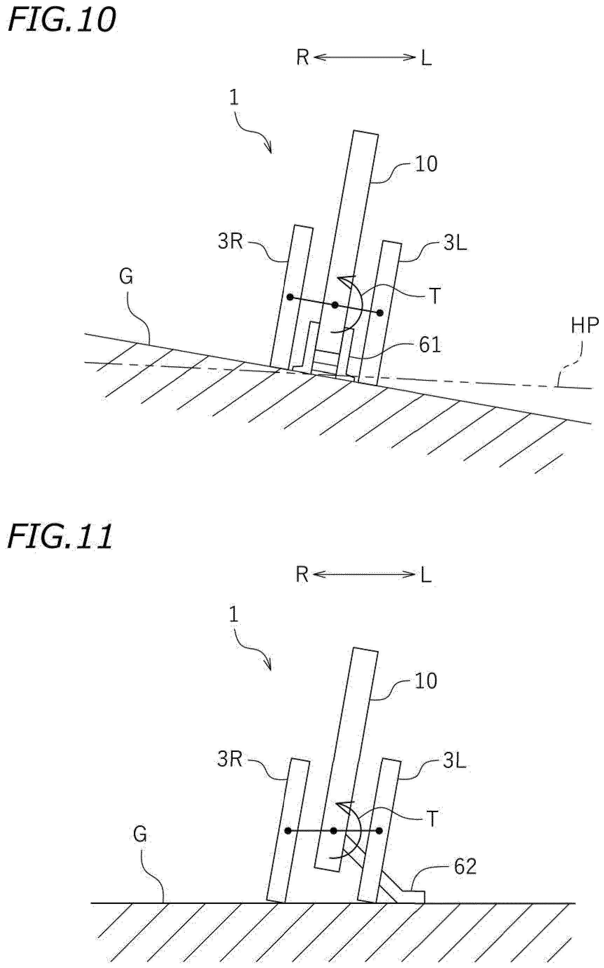

As shown in an exaggerated manner in FIG. 10, there may be cases where the leaning vehicle 1 is parked by using the center stand 61 on the ground G tilted leftward relative to the horizontal plane HP, for example. In such a case, the vehicle body frame 10 will be tilted leftward from the vertical line. When the standing assist control section 37 is providing standing assist, the lean actuator 33 applies a rightward torque T to the vehicle body frame 10 so as to keep the vehicle body frame 10 standing in the vertical direction. As a result, the support by the center stand 61 may become unstable.

As shown in FIG. 11, there may be cases where the leaning vehicle 1 is parked by using the side stand 62. Also in such a case, the vehicle body frame 10 will be tilted leftward from the vertical line. When the standing assist control section 37 is providing standing assist, a rightward torque T is applied to the vehicle body frame 10. As a result, the support by the side stand 62 may become unstable.

However, with the leaning vehicle 1 according to the present embodiment, when the rider moves the center stand 61 or the side stand 62 into the support position while the standing assist is being provided (hereinafter, moving a stand into the support position will be referred to as "pulling down the stand", and moving a stand into the retracted position will be referred to as "retracting the stand"), the standing assist is discontinued. Therefore, a rightward torque T is not applied to the vehicle body frame 10. This prevents the lean actuator 33 from hindering the support by the center stand 61 or the side stand 62. Thus, it is possible to desirably support the vehicle body frame 10 by the center stand 61 or the side stand 62.

Note that if the rider terminates the standing assist before pulling down the center stand 61 or the side stand 62, it is possible to prevent the center stand 61 or the side stand 62 from hindering the support by the lean actuator 33. However, terminating the standing assist requires an operation of the operation switch 43. According to the present embodiment, it is possible to discontinue the standing assist only by pulling down the center stand 61 or the side stand 62 without the rider operating the operation switch 43. Thus, the rider can park the leaning vehicle 1 by the center stand 61 or the side stand 62 by an easier operation.

Although the output torque of the lean actuator 33 may be immediately eliminated upon detecting that the center stand 61 or the side stand 62 has been pulled down, the output torque of the lean actuator 33 is gradually reduced until the predetermined amount of time t0 elapses in the present embodiment (see FIG. 9). Thus, it is possible to avoid a sudden load being applied to the center stand 61 or the side stand 62 when the rider pulls down the center stand 61 or the side stand 62. Thus, the vehicle body frame 10 can be supported more stably by the center stand 61 or the side stand 62.

When the rider gets on the leaning vehicle 1 being parked and starts the leaning vehicle 1, the rider first retracts the center stand 61 or the side stand 62 and then operates the accelerator grip 15R to drive the leaning vehicle 1. If the standing assist is executed in this process, the rider can easily start the leaning vehicle 1. According to the present embodiment, when the center stand 61 or the side stand 62 is moved to the retracted position while the standing assist is discontinued, the standing assist is resumed. Thus, the leaning vehicle 1 is standing by itself before starting, and the rider can easily start the leaning vehicle 1.

While one embodiment of the leaning vehicle has been described above, the embodiment is merely an example. Various other embodiments are possible.

The leaning vehicle 1 in the embodiment described above is a scooter. However, the vehicle form of the leaning vehicle is not limited to a scooter.

The leaning vehicle 1 according to the embodiment described above includes both the center stand 61 and the side stand 62. However, the leaning vehicle 1 may include only one of the center stand 61 and the side stand 62.

While the standing assist is turned ON/OFF as the rider operates the operation switch 43 in the embodiment described above, the standing assist performed by the actuator control device 36 may be automatically turned ON/OFF based on a predetermined condition.

While the actuator control device 36 includes the standing assist resumption section 39 in the embodiment described above, the standing assist resumption section 39 may be optional.

While the standing assist discontinuation section 38 gradually reduce the output torque of the lean actuator 33 until the predetermined amount of time t0 elapses if it is detected that the center stand 61 or the side stand 62 is in the support position in the embodiment described above, there is no particular limitation on how the output torque is reduced. The output torque of the lean actuator 33 may be immediately set to zero when it is detected that the center stand 61 or the side stand 62 is in the support position.

While the center stand switch 63 is used as a sensor that detects whether or not the center stand 61 is in the support position in the embodiment described above, the sensor that detects whether or not the center stand 61 is in the support position is not limited to the center stand switch 63. Similarly, the sensor that detects whether or not the side stand 62 is in the support position is not limited to the side stand switch 64. Hereinafter, the center stand 61 and the side stand 62 will be collectively referred to simply as a stand.

As a different sensor, an angle sensor (a tilt angle sensor, an IMU, etc.) provided on a vehicle body may be used if, for example, there is a difference between the inclination of the vehicle body when the stand is used (when the stand is in the support position, e.g., when parked) and the inclination of the vehicle body when the stand is not used (when the stand is in the retracted position, e.g., just before driving). It is possible to detect whether or not the stand is in the support position based on the tilt angle of the vehicle body detected by the angle sensor. A position sensor that measures the distance between, or the positions of, a predetermined part of the vehicle body frame 10 and a predetermined part of the stand may be used to detect whether or not the stand is in the support position based on the distance or the positions. It is also possible to detect whether or not the stand is in the support position based on the use of a plurality of switches in the vehicle. For example, it is possible to detect whether or not the stand is in the support position based on a seat sensor, an accelerator position sensor, ON/OFF of a steering handle switch that switches vehicle auxiliary equipment systems, or ON/OFF of a smart key. In addition to the stand switch that detects ON/OFF, a sensor that detects the rotational position of the stand (in other words, the angle of rotation) may be used to detect whether or not the stand is in the support position based on the rotational position of the stand. When a sensor capable of detecting multiple rotational positions is used, the support position and the retracted position of the stand may be detected. Instead of directly detecting the support position, it is possible to determine that the stand is in the support position if it is detected that the stand is not in the retracted position, and to determine that the stand is not in the support position if it is detected that the stand is in the retracted position. From the viewpoint of preventing false detection, positions between the retracted position and the support position may be detected so as to determine that the stand is neither in the retracted position nor in the support position when those in-between positions are detected.

### Reference Signs List

1: Leaning vehicle, 3L: Left front wheel (left wheel), 3R: Right front wheel (right wheel), 4: Rear wheel, 5: Seat, 7: Footrest, 10: Vehicle body frame, 11: Head pipe, 14: Steering shaft, 15: Steering handle, 19L: Left wheel support member, 19R: Right wheel support member, 21: Upper arm (link member), 21Cc: First central link shaft (central link shaft), 21Lc: First left link shaft (left link shaft), 21Rc: First right link shaft (right link shaft), 33: Lean actuator (actuator), 36: Actuator control device (control device), 37: Standing assist control section, 38: Standing assist discontinuation section, 39: Standing assist resumption section, 61: Center stand (stand), 62: Side stand (stand), 63: Center stand switch (sensor), 64: Side stand switch (sensor)

## Claims

1. A leaning vehicle (1) comprising:
a vehicle body frame (10) including a head pipe (11);
a left wheel (3L) arranged leftward relative to the head pipe (11) with regard to a vehicle left-right direction;
a right wheel (3R) arranged rightward relative to the head pipe (11) with regard to the vehicle left-right direction;
a left wheel support member (19L) that supports the left wheel (3L);
a right wheel support member (19R) that is arranged rightward of the left wheel support member (19L) with regard to the vehicle left-right direction and supports the right wheel (3R);
a link member (21) extending leftward and rightward of the vehicle body frame (10) with regard to the vehicle left-right direction;
a central link shaft (21Cc) extending in a vehicle front-rear direction that rotatably links the vehicle body frame (10) to the link member (21);
a left link shaft (21Lc) extending in the vehicle front-rear direction that rotatably links the left wheel support member (19L) to the link member (21);
a right link shaft (21Rc) extending in the vehicle front-rear direction that rotatably links the right wheel support member (19R) to the link member (21);
an actuator (33) that is configured to apply a torque around the central link shaft (21Cc) to the vehicle body frame (10);
a control device (36) that is configured to control the actuator (33);
a stand (61, 62) mounted on the vehicle body frame (10) so that the stand (61, 62) can change position between a retracted position and a support position, wherein the stand (61, 62) is configured to be in contact with a ground on which the vehicle stands when in the support position to support the vehicle body frame (10); and
a sensor (63, 64) that is configured to detect whether or not the stand (61, 62) is in the support position, wherein:
the control device (36) includes:
a standing assist control section (37) that is configured to execute standing assist for controlling the actuator (33) so that the vehicle body frame (10) stands in a vertical direction that coincides with a vehicle up-down direction;
**characterized in that** the control device (36) further includes:
a standing assist discontinuation section (38) that is configured to discontinue the standing assist of the standing assist control section (37) if it is detected by the sensor (63, 64) that the stand (61, 62) is in the support position while the standing assist control section (37) is executing the standing assist.

2. The leaning vehicle (1) according to claim 1, wherein the control device (36) includes a standing assist resumption section (39) that is configured to resume the standing assist by the standing assist control section (37) if it is detected by the sensor (63, 64) that the stand (61, 62) is not in the support position while the standing assist is discontinued by the standing assist discontinuation section (38).

3. The leaning vehicle (1) according to claim 1 or 2, wherein the standing assist discontinuation section (38) is configured so that while the standing assist is discontinued, the standing assist discontinuation section (38) is configured to gradually reduce the torque output by the actuator (33) until a predetermined amount of time elapses since when the sensor (63, 64) detects that the stand (61, 62) is in the support position so that the torque output by the actuator (33) is zero when the predetermined amount of time has elapsed.

4. The leaning vehicle (1) according to any one of claims 1 to 3, comprising:
a steering shaft (14) supported by the head pipe (11); and
a steering handle (15) fixed to the steering shaft (14),
wherein the left wheel (3L) and the right wheel (3R) are a left front wheel and a right front wheel, respectively, arranged forward relative to the steering handle (15) with regard to the vehicle front-rear direction.

5. The leaning vehicle (1) according to claim 4, comprising:
a rear wheel (4) arranged rearward relative to the left wheel (3L) and the right wheel (3R) with regard to the vehicle front-rear direction,
wherein the stand is a center stand (61) that supports the vehicle body frame (10) with the rear wheel (4) raised off the ground on which the vehicle stands.

6. The leaning vehicle (1) according to any one of claims 1 to 3, wherein the stand is a side stand (62) that supports the vehicle body frame (10) in a tilted state relative to the ground on which the vehicle stands.

7. The leaning vehicle (1) according to any one of claims 1 to 6, comprising:
a seat (5) supported by the vehicle body frame (10); and
a footrest (7) that is configured to support the feet of a rider of the vehicle seated on the seat (5), the footrest (7) being supported by the vehicle body frame (10) and arranged downward of the seat (5) with regard to the vehicle up-down direction.

## Patentansprüche

1. Ein Neigefahrzeug (1), das umfasst:
einem Fahrzeugkörperrahmen (10), der ein Kopfrohr (11) enthält;
ein linkes Rad (3L), das nach links relativ zu dem Kopfrohr (11) in Bezug auf eine Fahrzeug-Links-Rechts-Richtung angeordnet ist;
ein rechtes Rad (3R), das nach rechts relativ zu dem Kopfrohr (11) in Bezug auf die Fahrzeug-Links-Rechts-Richtung angeordnet ist;
ein linkes Radlagerelement (19L), welches das linke Rad (3L) lagert;
ein rechtes Radlagerelement (19R), das rechts von dem linken Radlagerelement (19L) in Bezug auf die Fahrzeug-Links-Rechts-Richtung angeordnet ist und das rechte Rad (3R) lagert;
ein Lenkerelement (21), das sich links und rechts vom Fahrzeugkörperrahmen (10) in Bezug auf die Fahrzeug-Links-Rechts-Richtung erstreckt;
eine zentrale Lenkerwelle (21Cc), die sich in einer Fahrzeug-Vorder-Rück-Richtung erstreckt und den Fahrzeugkörperrahmen (10) drehbar mit dem Lenkerelement (21) verbindet;
eine linke Lenkerwelle (21Lc), die sich in der Fahrzeug-Vorder-Rück-Richtung erstreckt und das linke Radlagerelement (19L) drehbar mit dem Lenkerelement (21) verbindet;
eine rechte Lenkerwelle (21Rc), die sich in der Fahrzeug-Vorder-Rück-Richtung erstreckt und das rechte Radlagerelement (19R) drehbar mit dem Lenkerelement (21) verbindet;
einen Aktuator (33), der konfiguriert ist, um ein Drehmoment um die zentrale Lenkerwelle (21Cc) auf den Fahrzeugkörperrahmen (10) auszuüben;
eine Steuervorrichtung (36), die konfiguriert ist, um den Aktuator (33) zu steuern;
einen Ständer (61, 62), der an dem Fahrzeugkörperrahmen (10) angebracht ist, so dass der Ständer (61, 62) seine Position zwischen einer zurückgezogenen Position und einer Stützposition ändern kann, wobei der Ständer (61, 62) konfiguriert ist, um in Kontakt mit einem Boden, auf dem das Fahrzeug steht, zu sein, wenn er in der Stützposition ist, um den Fahrzeugkörperrahmen (10) zu stützen; und
einen Sensor (63, 64), der konfiguriert ist, um zu erfassen, ob sich der Ständer (61, 62) in der Stützposition befindet oder nicht, wobei:
die Steuervorrichtung (36) enthält:
einen Stehhilfe-Steuerabschnitt (37), der konfiguriert ist, um eine Stehhilfe auszuführen, um den Aktuator (33) zu steuern, so dass der Fahrzeugkörperrahmen (10) in einer vertikalen Richtung steht, die mit einer Fahrzeug-Auf-Ab-Richtung übereinstimmt;
**dadurch gekennzeichnet, dass** die Steuervorrichtung (36) weiter enthält:
einen Stehhilfe-Abbruchabschnitt (38), der konfiguriert ist, um die Stehhilfe des Stehhilfe-Steuerabschnitts (37) abzubrechen, wenn durch den Sensor (63, 64) erfasst wird, dass sich der Ständer (61, 62) in der Stützposition befindet, während der Stehhilfe-Steuerabschnitt (37) die Stehhilfe ausführt.

2. Das Neigefahrzeug (1) gemäß Anspruch 1, wobei die Steuervorrichtung (36) einen Stehhilfe-Wiederaufnahmeabschnitt (39) enthält, der konfiguriert ist, um die Stehhilfe durch den Stehhilfe-Steuerabschnitt (37) wieder aufzunehmen, wenn durch den Sensor (63, 64) erfasst wird, dass sich der Ständer (61, 62) nicht in der Stützposition befindet, während die Stehhilfe durch den Stehhilfe-Unterbrechungsabschnitt (38) unterbrochen wird.

3. Das Neigefahrzeug (1) gemäß Anspruch 1 oder 2, wobei der Stehhilfe-Unterbrechungsabschnitt (38) konfiguriert ist, so dass, während die Stehhilfe unterbrochen wird, der Stehhilfe-Unterbrechungsabschnitt (38) konfiguriert ist, um die Drehmomentabgabe von dem Aktuator (33) allmählich zu reduzieren, bis eine vorbestimmte Zeitspanne verstrichen ist, seit der Sensor (63, 64) erfasst, dass sich der Ständer (61, 62) in der Stützposition befindet, so dass Drehmomentabgabe von dem Aktuator (33) null ist, wenn die vorbestimmte Zeitspanne verstrichen ist.

4. Das Neigefahrzeug (1) gemäß irgendeinem der Ansprüche 1 bis 3, das umfasst:
eine Lenkwelle (14), die von dem Kopfrohr (11) gelagert wird; und
eine Lenkstange (15), die an der Lenkwelle (14) fixiert ist,
wobei das linke Rad (3L) und das rechte Rad (3R) jeweils ein linkes Vorderrad und ein rechtes Vorderrad sind, die vorne relativ zur Lenkhandhabe (15) in Bezug auf die Fahrzeug-Vorder-Rück-Richtung angeordnet sind.

5. Das Neigefahrzeug (1) gemäß Anspruch 4, das umfasst:
ein Hinterrad (4), das hinten relativ zu dem linke Rad (3L) und dem rechte Rad (3R) in Bezug auf die Fahrzeug-Vorder-Rück-Richtung angeordnet ist,
wobei der Ständer ein Mittelständer (61) ist, der den Fahrzeugkörperrahmen (10) stützt, wobei das Hinterrad (4) vom Boden, auf dem das Fahrzeug steht, angehoben ist.

6. Das Neigefahrzeug (1) gemäß irgendeinem der Ansprüche 1 bis 3, wobei der Ständer ein Seitenständer (62) ist, der den Fahrzeugrahmen (10) in einem geneigten Zustand relativ zum Boden, auf dem das Fahrzeug steht, abstützt.

7. Das Neigefahrzeug (1) gemäß irgendeinem der Ansprüche 1 bis 6, das umfasst:
einem Sitz (5), der vom Fahrzeugkörperrahmen (10) getragen wird; und
eine Fußstütze (7), die so konfiguriert ist, dass sie die Füße eines Fahrers des Fahrzeugs, der auf dem Sitz (5) sitzt, stützt, wobei die Fußstütze (7) von dem Fahrzeugkörperrahmen (10) getragen wird und unterhalb des Sitzes (5) in Bezug auf die Fahrzeug-Auf-Ab-Richtung angeordnet ist.

## Revendications

1. Véhicule inclinable (1) comprenant :
un cadre de véhicule (10) incluant un tube de tête (11) ;
une roue gauche (3L) agencée vers la gauche par rapport au tube de tête (11) selon une direction gauche-droite du véhicule ;
une roue droite (3R) agencée vers la droite par rapport au tube de tête (11) selon la direction gauche-droite du véhicule ;
un élément de support de roue gauche (19L) qui supporte la roue gauche (3L) ;
un élément de support de roue droite (19R) qui est agencé à droite de l'élément de support de roue gauche (19L) selon la direction gauche-droite du véhicule et qui supporte la roue droite (3R) ;
un élément de liaison (21) s'étendant vers la gauche et vers la droite du cadre de véhicule (10) selon la direction gauche-droite du véhicule ;
un axe de liaison central (21Cc) s'étendant en direction avant-arrière du véhicule qui relie de manière rotative le cadre de véhicule (10) à l'élément de liaison (21) ;
un axe de liaison gauche (21Lc) s'étendant en direction avant-arrière du véhicule qui relie de manière rotative l'élément de support de roue gauche (19L) à l'élément de liaison (21) ;
un axe de liaison droit (21Rc) s'étendant en direction avant-arrière du véhicule qui relie de manière rotative l'élément de support de roue droite (19R) à l'élément de liaison (21) ;
un actionneur (33) configuré pour appliquer un couple au cadre de véhicule (10) autour de l'axe de liaison central (21Cc) ;
un dispositif de contrôle (36) configuré pour contrôler l'actionneur (33) ;
une béquille (61, 62) montée sur le cadre de véhicule (10) de telle sorte que la béquille (61, 62) puisse changer de position entre une position rétractée et une position de support, dans lequel la béquille (61, 62) est configurée pour être en contact avec le sol sur lequel repose le véhicule quand il est en position de support pour supporter le cadre de véhicule (10) ; et
un capteur (63, 64) configuré pour détecter si la béquille (61, 62) est ou non en position de support, dans lequel :
le dispositif de contrôle (36) inclut :
une section de contrôle d'assistance à la station debout (37) configurée pour exécuter une assistance à la station debout afin de contrôler l'actionneur (33) de telle sorte que le cadre de véhicule (10) se trouve dans une direction verticale qui coïncide avec la direction haut-bas du véhicule ;
**caractérisé en ce que** le dispositif de contrôle (36) inclut en outre :
une section d'interruption d'assistance à la station debout (38) configurée pour interrompre l'assistance à la station debout de la section de contrôle d'assistance à la station debout (37) si le capteur (63, 64) détecte que la béquille (61, 62) est dans la position de support pendant que la section de contrôle d'assistance à la station debout (37) exécute l'assistance à la station debout.

2. Véhicule inclinable (1) selon la revendication 1, dans lequel le dispositif de contrôle (36) inclut une section de reprise d'assistance à la station debout (39) configurée pour reprendre l'assistance à la station debout par la section de contrôle d'assistance à la station debout (37) si le capteur (63, 64) détecte que la béquille (61, 62) n'est pas dans la position de support pendant que l'assistance à la station debout est interrompue par la section d'interruption d'assistance à la station debout (38).

3. Véhicule inclinable (1) selon la revendication 1 ou 2, dans lequel la section d'interruption d'assistance à la station debout (38) est configurée de telle sorte que, pendant que l'assistance à la station debout est interrompue, la section d'interruption d'assistance à la station debout (38) est configurée pour réduire graduellement le couple délivré par l'actionneur (33) jusqu'à ce qu'une durée prédéterminée se soit écoulée à partir du moment où le capteur (63, 64) détecte que la béquille (61, 62) est dans la position de support de telle sorte que le couple délivré par l'actionneur (33) est nul quand la durée prédéterminée s'est écoulée.

4. Véhicule inclinable (1) selon l'une quelconque des revendications 1 à 3, comprenant :
un arbre de direction (14) supporté par le tube de tête (11) ; et
un guidon (15) fixé à l'arbre de direction (14),
dans lequel la roue gauche (3L) et la roue droite (3R) sont respectivement une roue avant gauche et une roue avant droite, agencées vers l'avant par rapport au guidon (15) selon la direction avant-arrière du véhicule.

5. Véhicule inclinable (1) selon la revendication 4, comprenant :
une roue arrière (4) agencée vers l'arrière par rapport à la roue gauche (3L) et à la roue droite (3R) selon la direction avant-arrière du véhicule,
dans lequel la béquille est une béquille centrale (61) qui supporte le cadre de véhicule (10) avec la roue arrière (4) levée du sol sur lequel repose le véhicule.

6. Véhicule inclinable (1) selon l'une quelconque des revendications 1 à 3, dans lequel la béquille est une béquille latérale (62) qui supporte le cadre de véhicule (10) dans un état incliné par rapport au sol sur lequel repose le véhicule.

7. Véhicule inclinable (1) selon l'une quelconque des revendications 1 à 6, comprenant :
un siège (5) supporté par le cadre de véhicule (10) ; et
un repose-pieds (7) configuré pour supporter les pieds d'un conducteur du véhicule assis sur le siège (5), le repose-pieds (7) étant supporté par le cadre de véhicule (10) et agencé vers le bas du siège (5) selon la direction haut-bas du véhicule.
